# EUROPÄISCHE PATENTSCHRIFT

(11) **EP 0 681 360 B1**
(45) Veröffentlichungstag und Bekanntmachung des Hinweises auf die Patenterteilung: **25.03.1998**
(21) Anmeldenummer: 95105871.8
(22) Anmeldetag: 19.04.1995
(51) Int. Cl.: H02K 17/30, H02K 9/04, H02K 11/04

(54) **Kompaktantrieb aus Motor und Steuerung**
Motor and control forming a compact drive
Moteur et pilotage formant un entraînement

(30) Priorität: 20.04.1994 DE 4413723
(43) Veröffentlichungstag der Anmeldung: 08.11.1995
(73) Patentinhaber: VEM motors GmbH, D-38855 Wernigerode (DE)
(72) Erfinder: Gensch, Günter, Dr.-Ing., D-06847 Dessau (DE); Anders, Werner, Ing., D-01796 Pirna (DE); Wolf, Jürgen, Dr.-Ing., D-01257 Dresden (DE); Vökler, Dieter, Dr.-Ing., D-01187 Dresden (DE)

(56) Entgegenhaltungen:
- EP-A- 0 456 169
- DE-A- 4 337 463
- DE-U- 9 017 681
- DE-U- 9 305 174
- GB-A- 2 167 608

## Beschreibung

Die Erfindung betrifft einen Kompaktantrieb aus Motor und Steuerung, bei dem die in einem eigenen Gehäuse befindliche Steuerung dem Motor aufgesetzt ist und Kühlflächen der Steuerungsbaugruppe unterseitig aus dem Gehäuse der Steuerungsbaugruppe herausragen und bei dem der Motor aus Blechabschnitten des Statorpaketes gebildete Kühlflächen besitzt.

Es ist bereits eine Reihe von kompakten Antrieben beschrieben worden, bei denen die Steuerungen achsparallel zur Motorbaugruppe oberhalb derselben angeordnet sind.
Dabei wird zur Kühlung der dem Motor aufgesetzten Steuerungsbaugruppe in der Regel eine gute Wärmeabfuhr der innerhalb der Steuerungsbaugruppen entstehenden Wärme angestrebt.

Hierzu wird zum Beispiel in der EP-PS 0456169 vorgeschlagen, den die Steuerungsbaugruppe enthaltenden Klemmkasten mit einem Durchbruch zu versehen, durch den der Kühlkörper des Leistungsteils der Steuerungsbaugruppe thermisch in den Kühlluftstrom der Motorkühlung eingekoppelt wird. Eine ähnliche Lösung zeigt auch die DE-PS 4243044, in der eine dem Motorgehäuse aufgesetzte Wechselrichterbaugruppe über eine mit Kühlrippen versehene Grundplatte verfügt, die so mit dem Motorgehäuse verbunden ist, daß eine einheitliche Baugruppe gebildet wird, bei der im entstehenden Innenraum eine undifferenzierte Unterströmung der Kühlrippen der Grundplatte mit der Kühlluft der Motorbaugruppe erfolgt.
Nachteilig bei solchen Anordnungen ist, daß die erzielbare Kühlwirkung aus mehreren Gründen nur ungenügend ist, denn eine thermische Einkopplung der zu kühlenden Steuerungsbaugruppe in den Kühlluftstrom findet erst statt, wenn dieser mindestens teilweise durch die Wärmeaufnahme aus den Motorkühlrippen aufgeheizt ist. Der Schutz vor Überhitzung und Zerstörung der Steuerungsbaugruppe ist also in der Regel nur durch relativ überdimensionierte Kühlkörper gewährleistet .
Um diesem Nachteil zu entgehen, wurden Lösungen gesucht, bei denen eine thermische Serienschaltung der zu kühlenden Baugruppen realisiert wird. Das geschieht z.B. nach den DE-GMn 9017681 und 9305174 dadurch, daß Motor- und Steuerungsbaugruppe axial hintereinander vor einem Lüfter angeordnet sind, dessen Luftstrom durch ein geeignetes, beide Baugruppen umschließendes Gehäuse, geführt wird. Durch eine Anordnung der Steuerungsbaugruppe unmittelbar nach dem Lüfter wird gewährleistet, daß die in der Regel temperaturempfindlichere Steuerungsbaugruppe mit frischer Kühlluft zuerst ausreichend gekühlt wird.

Der Nachteil dieser Lösungen besteht in der unumgänglichen Längenvergrößerung der Gesamtbaugruppe durch die auch räumliche Serienschaltung der Einzelbaugruppen. Für eine Reihe von Einzelfällen ist diese Längenzunahme der Antriebe nicht tolerierbar, so daß das Einsatzgebiet solcher Antriebe beschränkt ist.

Ziel der Erfindung ist es also, einen universell einsetzbaren Kompaktantrieb aus Motor und Steuerung zu schaffen, der auch bei auf den Motor aufgesetzter Steuerungsbaugruppe einen ausreichenden Überhitzungsschutz für die Steuerungsbaugruppe gewährleistet.

Die Aufgabe, mit geringemAufwand an technischen Mitteln einen zuverlässig vor Überhitzung geschützten Kompaktantrieb mit möglichst geringem Volumen zu entwickeln, wird erfindungsgemäß mit den Merkmalen des Hauptanspruches gelöst, wobei in den Ansprüchen 2 bis 4 vorteilhafte Ausgestaltungen der Erfindung niedergelegt sind.

Ein Vorteil der Erfindung besteht darin, daß durch die eigenartige Gestaltung einer Trägerbaugruppe für die dem Motor aufgesetzte Steuerungsbaugruppe der Kühlluftstrom des dem Motor nachgeordneten Lüfters zuerst eine Wärmeabfuhr der Kühlelemente der Steuerungsbaugruppe bewirkt und anschließend ohne zusätzliche Umlenkelemente die quer zur Längsachse des Kompaktantriebes angeordnete Kühlflächen des Motors bestreicht.

Dabei wird durch einseitigen Abschluß der auch als Führung des Kühlluftstromes dienenden Trägerbaugruppe innerhalb dieser ein Staudruck erzeugt, der ein tangentiales Abfließen des Kühlluftstromes entlang der Motorkühlflächen mit gleichzeitig optimalem Bestreichen derselben bewirkt.

Die Erfindung soll an einem nachfolgenden Ausführungsbeispiel näher erläutert werden. Dabei zeigen die zugehörigen Zeichnungen in
- Fig. 1:: die schematische Darstellung eines Kompaktantriebes aus Motor- und Steuerungsbaugruppe und
- Fig. 2:: eine erfindungsgemäße Ausgestaltung eines Kompaktantriebes aus Motor- und Steuerungsbaugruppe sowie die Anordnung von Kühlflächen und Trägerbaugruppen

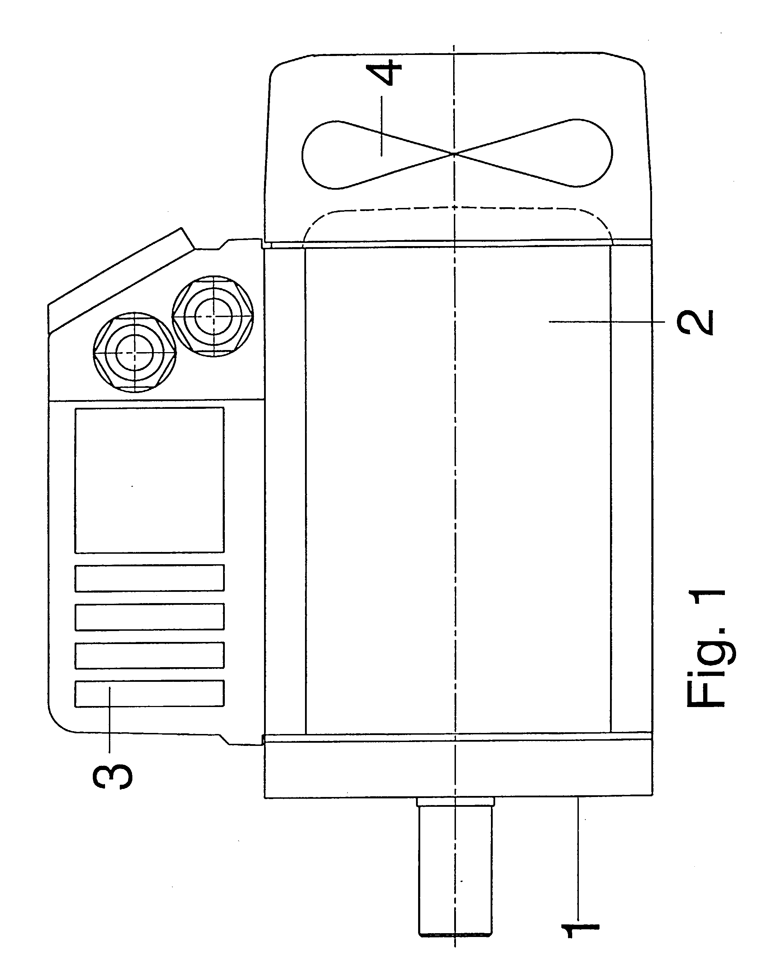

Gemäß Fig. 1 besteht ein allgemeiner Kompaktantrieb aus einem Motor 1 mit einem Statorpaket 2 und einer in einem Gehäuse 3 befindlichen Steuerungsbaugruppe. Außerdem ist ein Lüfter 4 vorhanden.

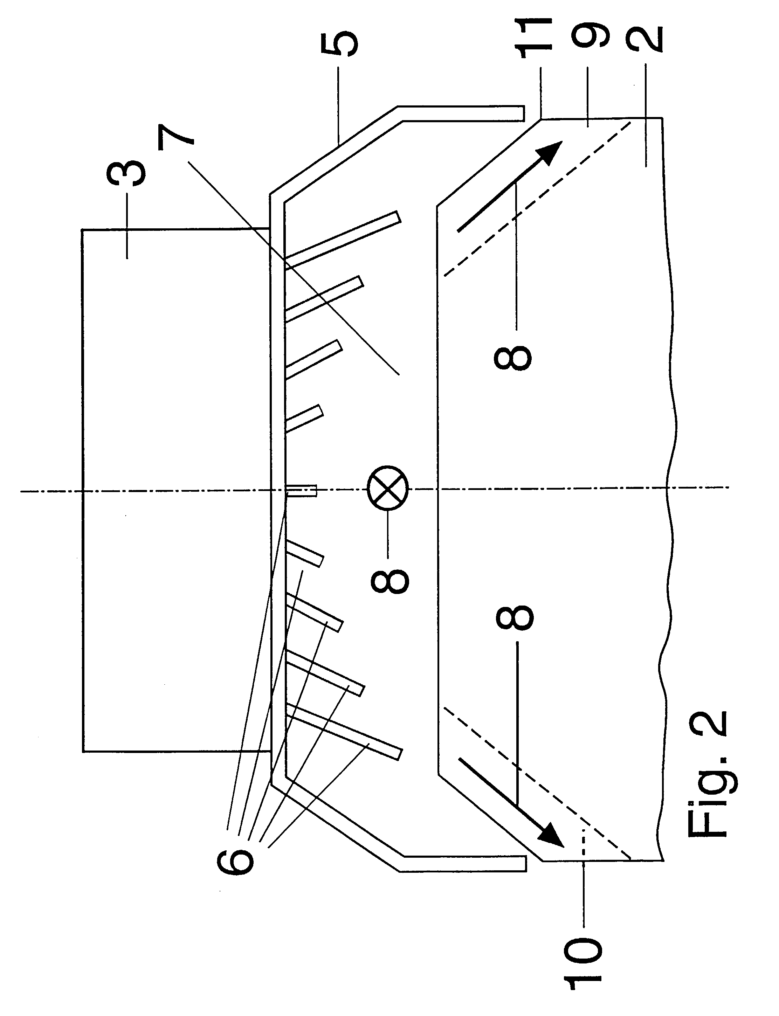

Eine erfindungsgemäße Ausgestaltung eines solchen Kompaktantriebes weist gem. Fig. 2 folgende Bestandteile auf:

Dem Motor 1 mit seinem Statorpaket 2 ist eine Trägerbaugruppe 5 aufgesetzt, die die im Gehäuse 3 befindliche Steuerbaugruppe trägt. Aus dem Gehäuse 3 ragen unterseitig Kühlflächen 6 in den Raum 7, der zwischen dem Statorpaket 2 und der Trägerbaugruppe 5 entsteht und der zum Motorvorderteil hin abgeschlossen ist. Dabei sind die Kühlflächen 6 der Steuerungsbaugruppe 3 derart von unterschiedlicher Länge gestaltet, daß die Verbindung ihrer Endpunkte sich als ein Kreisbogenabschnitt darstellt. Die Bleche des Statorpaketes 2 hingegen sind gruppenweise versetzt so angeordnet, daß sich über die Länge des Statorpaketes 2 radiale Kühlflächen 9 mit dazwischen befindlichen Kühlkanälen 10 ergeben. Die Trägerbaugruppe 5 ist als trogartig geformtes Rechteckelement, das an jeder Längsseite zweifach abgewinkelt ist, ausgeführt und der Motoroberseite so aufgesetzt, daß die untere Kante der letzten Abwinkelung sich etwa im Bereich der äußeren Kanten 11 der Kühlflächen 10 befindet. Die auf vorgenannte Weise angeordneten Elemente wirken auf folgende Weise zusammen:
Vom Lüfter 4 wird ein Kühlluftstrom 8 erzeugt, der zunächst in den Raum 7 einströmt und wegen des Abschlusses dieses Raumes 7 darin einen Staudruck erzeugt. Dieser Staudruck führt im Zusammenwirken mit der Gestaltung der Kühlflächen 6 der Steuerungsbaugruppe zu einem optimalen Umströmen dieser Kühlflächen 6 und damit gleichzeitig zu einem optimalen Wärmeaustrag. Andererseits wird durch den sich aufbauenden Staudruck im Raum ein Auslenken des Kühlluftstroms 8 in die oben beschriebenen Kühlkanäle 10 bewirkt, so daß der Kühlluftstrom 8 nach der Kühlung der Steuerungsbaugruppe auch die ausreichende Kühlung des Motors 1 gewährleistet. Zulätzlich bewirkt der Staudruck ein hinreichend langes Entlangführen der Kühlluft an den Kühlflächen 6, ohne daß der Kühlluftstrom 8 vorzeitig ausweicht und dabei eine unzureichende Kühlung der Steuerungsbaugruppe veranlaßt. Durch eine geeignete Dimensionierung der als Kühlluftführung dienenden Trägerbaugruppe 3 sowie der Kühlflächen 6 und 10 ist eine der jeweiligen Motor- und Steuerungsverlustleistung angepaßte ausreichende Kühlung realisierbar.

Der Vorteil der Erfindung besteht darin, daß durch die erfindungsgemäße Gestaltung des Kompaktantriebes sowohl eine ausreichend gesicherte Kühlung der verlustleistungsbehafteten Baugruppen als auch eine möglichst geringe Baulänge des Kompaktantriebes gewährleistet sind.
Überraschenderweise läßt sich durch die erfindungsgemäße Gestaltung des Kompaktantriebes der baulängenmindernde Effekt einer auf den Motor 1 aufgesetzten Steuerungsbaugruppe mit der kühlungsmäßig günstigen thermischen Serienschaltung von Steuerungsbaugruppe und Motor 1 verbinden. Dabei wird erfindungsgemäß nicht schlechthin die an sich bekannte thermische Serienschaltung angewandt, sondern durch eine besondere Strömungsführung auch ein maximaler Wärmeaustragseffekt erzielt.

Im Ergebnis entsteht durch die Kombination an sich gegenläufiger Konstruktionsprinzipien ein volumenmäßig universell einsetzbarer Kompaktanrieb mit ausreichender Kühlsicherheit für beide Hauptbaugruppen.

## Patentansprüche

1. **Kompaktantrieb aus Motor (1) und Steuerung**, bei dem die in einem eigenen Gehäuse (3) befindliche Steuerung dem Motor (1) aufgesetzt ist und Kühlflächen (6) der Steuerungsbaugruppe unterseitig aus dem Gehäuse (3) der Steuerungsbaugruppe herausragen und bei dem der Motor aus Blechabschnitten des Statorpaketes (2) gebildete Kühlflächen (6) besitzt,
**gekennzeichnet dadurch,**
daß eine Trägerbaugruppe (5) vorhanden ist, die die Steuerungsbaugruppe trägt und gleichzeitig als Leitsystem für einen Kühlluftstrom (8) derart ausgebildet ist,
daß der Kühlluftstrom (8) die Kühlflächen (6) der Steuerungsbaugruppe parallel zur Längsachse des Kompaktantriebes und die Kühlflächen (9) des Motors quer zur Längsachse des Motors durchströmt,
wobei die Trägerbaugruppe (5) motorstirnseitig geschlossen ist.

2. Kompaktantrieb aus Motor und Steuerung nach Anspruch 1,
**gekennzeichnet dadurch,**
daß die Trägerbaugruppe (5) als trogartig ausgeformtes Rechteckelement ausgeführt ist, das der Motoroberseite so aufgesetzt ist, daß die untere Kante der letzten Abwinkelung sich etwa im Bereich der äußeren Kanten (11) der oberen Kühlflächen (9) des Motors befindet.

3. Kompaktantrieb aus Motor und Steuerung nach Anspruch 2,
**gekennzeichnet dadurch,**
daß die Trägerbaugruppe (5) als an jeder Längsseite mehrfach abgewinkeltes Rechteckblech ausgeführt ist.

4. Kompaktantrieb aus Motor und Steuerung nach Anspruch 1,
**gekennzeichnet dadurch,**
daß die Kühlflächen (6) der Steuerungsbaugruppe derart von unterschiedlicher Länge gestaltet sind, daß die Verbindungslinie ihrer Endpunkte sich als ein Kurvenabschnitt, z. B. in der Art eines Kreis- oder Ellipsenbogenabschnittes, darstellt.

## Claims

1. Compact drive consisting of motor (1) and control, with the control installed in its own casing (3) and mounted on top of the motor (1), with the cooling faces (6) of control unit projecting from the lower side of casing (3) of control unit, and with motor having cooling faces (6) formed by sheet-metal sections of the stator package (2),
being characterized by the fact that
a carrier assembly (5) is provided to carry the control unit and designed to be at the same time the guide system for the cooling air flow (8) such
that the cooling air flow (8) flows through the cooling faces (6) of the control unit in parallel to the longitudinal axis of compact drive and through the cooling faces (9) of motor transversely to the longitudinal axis of motor;
with the carrier unit (5) being closed on the motor front side.

2. Compact drive consisting of motor and control according to claim 1 above,
being characterized by the fact that
the carrier unit (5) is designed as a trough-shaped rectangular element installed on the top of motor such that the lower edge of the last bent angle is located approximately in the area of the outside edges (11) of the upper cooling faces (9) of the motor.

3. Compact drive consisting of motor and control according to claim 2 above,
being characterized by the fact that
the carrier unit (5) is designed as rectangular sheet metal bent to form several angles.

4. Compact drive consisting of motor and control according to claim 1 above,
being characterized by the fact that
the cooling faces (6) of control unit are formed in different lengths such that the interconnection line of their end points yields a curve section, e.g. in the form of a circular arc or elliptic arc.

## Revendications

1. **Entraînement compact, composé d'un moteur (1) et d'un système de réglage,** où ce système de réglage, se trouvant dans sa propre boîte (3), est monté sur le moteur (1), et les surfaces de refroidissement (6) du système de réglage dépassent le côté inférieur de la boîte (3) du système de réglage, et où le moteur a des surfaces de refroidissement (6) se composant de segments de tôles du paquet de stator (2),
**caractérisé en ce qu'**
il y a un élément de support (5) qui porte le système de réglage et qui est en même temps formé en système de guidage d'un courant d'air de refroidissement (8) de façon,
que le courant d'air de refroidissement (8) passe les surfaces de refroidissement (6) du système de réglage parallèlement à l'axe longitudinal de l'entraînement compact, et qu'il passe les surfaces de refroidissement (9) du moteur en travers à l'axe longitudinal du moteur,
et où l'élément de support (5) est fermé sur le côté frontal du moteur.

2. Entraînement compact, composé d'un moteur et d'un système de réglage selon la revendication 1,
**caracterisé en ce que**
l'élément de support (5) est réalisé en élément d'auge rectangle qui est monté sur le côté supérieur du moteur de façon que le bord inférieur du dernier pli se trouve à peu près dans la zone des bords extérieurs (11) des surfaces de refroidissement supérieures (9) du moteur.

3. Entraînement compact, composé d'un moteur et d'un système de réglage selon la revendication 2,
**caracterisé en ce que**
l'élément de support (5) est exécuté en forme de tôle rectangle, pliée plusieurs fois à chaque surface longitudinale.

4. Entraînement compact, composé d'un moteur et d'un système de réglage selon la revendication 1,
**caracterisé en ce que**
les surfaces de refroidissement (6) du système de réglage sont exécutées de longueur différente d'une telle façon, que la ligne de jonction de leurs points finaux se présente sous forme d'un secteur de courbe, par exemple de sorte d'un secteur de cercle ou de courbure elliptique.
